Europäisches Patentamt

European Patent Office

Office européen des brevets

(11) Veröffentlichungsnummer: **0 318 872**

**A2**

# (12) EUROPÄISCHE PATENTANMELDUNG

(21) Anmeldenummer: 88119725.5

(22) Anmeldetag: 26.11.88

(51) Int. Cl.4: **B01D 25/12**

(30) Priorität: 28.11.87 DE 3740399

(43) Veröffentlichungstag der Anmeldung:
07.06.89 Patentblatt 89/23

(84) Benannte Vertragsstaaten:
**DE FR**

(71) Anmelder: **Klöckner-Humboldt-Deutz Aktiengesellschaft**
**Deutz-Mülheimer-Strasse 111 Postfach 80 05 09**
**D-5000 Köln 80(DE)**

(72) Erfinder: **Schotten, Alfons**
**An den Eichen 9**
**D-5168 Nideggen-Rath(DE)**
Erfinder: **Gildemeister, Hans-H., Dr.**
**Im Meisenbusch 19**
**D-5063 Overath 6(DE)**

(74) Vertreter: **Beisner, Klaus, Dipl.-Ing. et al**
**c/o KHD Humboldt Wedag AG Patente und Lizenzen Wiersbergstrasse Postfach 91 04 57**
**D-5000 Köln 91(DE)**

(54) **Vorrichtung zum Austreiben gasförmiger und/oder flüssiger Medien aus schütt- bzw. rieselfähigem Gut.**

(57) Bei einer Vorrichtung zum Austreiben gasförmiger und/oder flüssiger Medien aus schütt- bzw. rieselfähigem Gut unter Einwirkung von Preßdruck auf jeweils eine in mindestens einer Preßkammer eingeschlossene Charge des Gutes und Verdichten zur festen Masse eines Preßkuchens, wobei die Preßkammer ein Paar im Abstand parallele, im wesentlichen in vertikalen Ebenen verlaufende Preßflächen aufweist, wird vorgeschlagen, daß die Preßflächen (2, 3 bzw. 42, 62) in horizontaler Richtung verschiebbar sind und zwischen sich mit relativ zueinander veränderlichem Abstand (A) einen Preßspalt (4) mit vertikalen Wänden begrenzen und mit Mitteln (29) bzw. 44, 45 oder 56) zur Abstandsänderung unter Preßdruck in Verbindung stehen.

Weiterhin ist einer Preßkammer (1, 51) ein relativ zu und auf dieser axial verschiebbarer Mantelring (5, 55) zugeordnet, der Antriebs-und Führungsmittel (6 bzw. 7) zur taktweisen Verschiebung von einer den Preßspalt (4) über brückenden und die Preßkammer (1) nach außen umschließenden ersten Axialposition zu einer den Preßspalt (4) freigebenden und die Preßkammer (1) ringsum öffnenden zweiten Axialposition aufweist.

FIG.6

## Vorrichtung zum Austreiben gasförmiger und/oder flüssiger Medien aus schütt- bzw. rieselfähigem Gut

Die Erfindung betrifft eine Vorrichtung zum Austreiben gasförmiger und/oder flüssiger Medien aus schütt- bzw. rieselfähigem Gut unter Einwirkung von Preßdruck auf jeweils eine in einer Preßkammer eingeschlossene Charge des Gutes und Verdichten derselben zur festen Masse eines Preßkuchens.

Ständig wachsende Mengen von Abfällen, insbesondere Schlämme von Klärwerken aber auch Industrierschlämme sowie beispielsweise Schlick aus Flüssen und Hafenbecken müssen unter laufend verschärften Gesetzesvorschriften und Auflagen entsorgt und insbesondere dabei weitestgehend entwässert werden.

Die Kosten hierfür sowie die Deponiekosten bewegen sich, regional unterschiedlich, insgesamt mit stark steigender Tendenz. Dabei spielt die Schließung kleiner Deponien und Entwicklung zu wenigen Großdeponien durch Erhöhung der Transportentfernungen und damit der Transportkosten eine weitere wesentliche Rolle bei der Verteuerung der Entsorgungskosten.

Das Erfordernis einer weitgehenden Entwässerung solcher schlammförmiger Abfallstoffe entspricht den steigenden Anforderungen an deren Feststoffgehalte und bodenmechanische Standfestigkeit als Voraussetzung für die Zulassung zur Deponierung. Zur Zeit wird mangels geeigneter Verfahren vielfach versucht, den Feststoffgehalt und die mechanische Standfestigkeit eines Abfallstoffes durch meist teure Zuschlagstoffe zu erreichen, die neben der Kostenerhöhung auch noch den weiteren Nachteil aufweisen, daß sie zusätzliche Deponiekapazität beanspruchen.

Der weitere Ausweg zur landwirtschaftlichen Nutzung scheitert neben oft zu hohen Schwermetallgehalten an zu großen Transportentfernungen zu geeigneten Landbauflächen sowie an Problemen der Zwischenlagerung. Zudem sind Kompostierungsverfahren wegen der hierfür benötigten Zuschlagstoffe sehr aufwendig und somit für die vorgesehene Entsorgung der schlammförmigen Abfallstoffe insgesamt unbefriedigend.

Bekannte Verfahren und Anlagen zur Schlammverbrennung oder -trocknung leiden oft unter der Schwierigkeit zu hoher Wassergehalte ungenügend entwässerter Schlämme. Zur Trocknung muß wertvolle und kostenträchtige Primärenergie aufgewandt werden. Als weiterer Nachteil kommt bei Entsorgung von Schlamm in Müllverbrennungsanlagen hinzu, daß Massen mit hohem Gehalt an Restfeuchte zur Bildung von Schwelnestern und somit zu unvollständiger Verbrennung neigen.

Zur wirtschaftlichen Lösung des Schlammentwässerungsproblems wird mit der europäischen Patentschrift 0 092 146 vorgeschlagen, eine bessere Schlammentwässerung dadurch zu erzielen, daß teilentwässerter Schlamm zunächst in Pellets geformt wird, worauf diese mit einem Umhüllungsmaterial in Form eines trockenen Pulvers umhüllt und anschließend chargenweise verdichtet und dadurch druckentwässert werden. Dabei entsteht ein kompakter, netzartig von Drainageschichten des Umhüllungsmaterials durchsetzter Preßling. Diese Drainageschichten ermöglichen dem aus den einzelnen Pellets im Preßling ausgequetschten gasförmigen sowie flüssigen Medium über den Weg von einer Drainageschicht zur anderen aus der Masse des Preßlings nach außen auszutreten.

Es handelt sich hierbei um ein mechanisch durchführbares Entwässerungsverfahren, welches zu einer signifikanten Reduzierung an Masse und Volumen des behandelten schlammförmigen Stoffes führt. Das Verfahren liefert somit ein problemlos zu deponierendes Produkt. Der erzielbare extrem geringe Feuchtigkeitsgehalt macht dieses zugleich zum geeigneten Aufgabematerial in Trocknungs- und Verbrennungsanlagen. Seine Eigenschaft als erdähnliches, nach Zerkleinerung rieselfähiges Schüttgut macht es auch für die landwirtschaftliche Nutzung als Kompostierungs material geeignet.

Sehr wesentlich bei Durchführung des bekannten Verfahrens ist die schonende Behandlung des aus einzelnen mit Umhüllungsmaterial überzogenen Pellets bestehenden schüttfähigen Gutes beim Chargieren einer Preßkammer.

Ein weiteres Problem ergibt sich beim Ausstoßen des fertig verdichteten Preßlings, da dieser in Form einer festen Masse als Preßkuchen vorliegt. Weiterhin ist für den Entwässerungserfolg des vorgenannten Verfahrens von Bedeutung, daß das schwierig zu entwässernde Material in kleinen Chargen und damit in geringen Schichtdicken ausgepreßt werden muß, um möglichst kurze Entwässerungswege zu schaffen, und dadurch zu hohe, dem Austreiben der Flüssigkeit entgegenwirkende Strömungswiderstände zu vermeiden. Weiterhin muß durch die Ausgestaltung der Preßvorrichtung sichergestellt werden, daß die Einwirkung von Scherkräften auf das aus einzelnen Pellets bestehende Schüttgut vermieden und die Drainageschichten der zu verpressenden Charge nicht durch Scher- und Schmiereffekte beeinträchtigt werden.

Der vorliegenden Erfindung liegt die Aufgabe zugrunde, eine Vorrichtung zum Austreiben gasförmiger und/oder flüssiger Medien aus schütt-bzw. rieselfähigem Gut unter Einwirkung von Preßdruck auf jeweils eine in eine Preßkammer eingeschlossene Charge des Gutes und Verdichten derselben zur festen Masse eines Preßkuchens zu schaffen, welche sich insbesondere zur Durchführung des bekannten mechanischen Entwässerungsverfahrens eignet, dabei die anfallende Masse des Preßkuchens im verdichteten Zustand um 20 bis 30 % reduziert, und in besonderer Weise geeignet ist, um das schlecht zu entwässernde Material in kleinen Portionen und mit vergleichsweise geringen Schichtdicken und somit vergleichsweise kurzen Entwässerungswegen zu entwässern. Andererseits jedoch soll die Vorrichtung mit vergleichsweise hohen Taktfol gen ihrer Arbeitsschritte eine quasikontinuierliche Entwässerungsleistung mit großen Durchsatz erzielen.

Die Aufgabe wird bei einer Vorrichtung zum Austreiben gasförmiger und/oder flüssiger Medien aus schütt- bzw. rieselfähigem Gut unter Einwirkung von Preßdruck auf jeweils eine in mindestens einer Preßkammer eingeschlossene Charge des Gutes und Verdichten zur festen Masse eines Preßkuchens, wobei die Preßkammer ein Paar im Abstand parallele, im wesentlichen in vertikalen Ebenen verlaufende Preßflächen aufweist, mit der Erfindung dadurch gelöst, daß die Preßflächen in horizontaler Richtung verschiebbar Preßflächen sind und zwischen sich mit relativ zueinander veränderlichem Abstand einen Preßspalt mit vertikalen Wänden begrenzen und mit Mitteln zur Abstandveränderung unter Preßdruck in Verbindung stehen.

Mit großem Vorteil eignet sich die Vorrichtung zur Durchführung des vorgenannten Verfahrens, weil durch die erfindungsgemäße Ausgestaltung bei vergleichsweise unkomplizierter Ausgestaltung einerseits bei Aufgabe kleiner Einzelchargen mit geringen Schichtdicken und andererseits bei vergleichsweise schneller Taktfolge der Arbeitsschritte beim Preßvorgang eine quasikontinuierliche Betriebsweise mit einer vergleichsweise großen spezifischen Leistung erreicht wird.

Dies wird auch dadurch vorteilhaft begünstigt, daß die feste Masse eines Preßkuchens infolge der vertikalen Preßspalte beim Öffnen einer Preßkammer aus den Preßspalten problemlos und vergleichsweise schnell entfernt werden kann.

Weiterhin ermöglicht die vertikale Anordnung jeder preßkammer bei schmalem Preßspalt eine problemlos-gleichmäßige Beschickung mit Schüttgut unter Vermeidung von zu Schmiereffekten führenden Scherkräften in der zu verpressenden Schüttgutcharge.

Ein weiterer Vorteil des engen Preßspaltes ergibt sich daraus, daß bei der Beschickung durch Einrieseln unter Schwerkraft eine Entmischung der einzelnen Pellets nach der Größe weitestgehend vermieden wird.

Eine Ausgestaltung sieht vor, daß jeder Preßkammer ein relativ zu und auf dieser axial verschiebbarer Mantelring zugeordnet ist, der Antriebs- und Stellmittel zur taktweisen Verschiebung von einer den Preßspalt überbrückenden und die Preßkammer nach außen umschließenden ersten Axialposition zu einer den Preßspalt freigebenden und die Preßkammer ringsum öffnenden zweiten Axialposition aufweist.

Die Anordnung eines Mantelringes in der Funktion eines Schiebers zum Schließen und Öffnen einer jeden Preßkammer ergibt eine sehr robuste, unkomplizierte, kompakte und somit äußerst zweckmäßige Ausgestaltung der Vorrichtung.

Beim Öffnen einer Preßkammer durch Beiseiteschieben des Mantelringes wird am Preßspalt ringsum der volle Querschnitt des vertikalen Preßspaltes frei, wobei dann der feste Preßkuchen beim Auseinanderfahren der Preßwände einer Preßkammer frei nach unten herausfallen kann.

Eine Ausgestaltung sieht vor, daß die Vorrichtung als Mehrkammerpresse mit in horizontaler Reihe angeordneten Preßkammern ausgebildet ist.

Hierdurch wird mit Vorteil das Durchsatzvermögen der Vorrichtung gesteigert. Es wird aber auch ein sehr günstiges Verhältnis von Kosten zur Leistung erzielt und damit die Wirtschaftlichkeit der Schlammentwässerung mit Hilfe der Vorrichtung verbessert.

Eine Ausgestaltung sieht vor, daß der Mantelring an seiner Oberseite eine Einfüllöffnung aufweist. Dadurch ergibt sich in dem zum Verschließen der Preßkammer vorgesehenen Bereich des Mantelringes eine vergleichsweise schmale axiale Abmessung desselben, wenn, gemäß einem weiteren Ausgestaltungsvorschlag, der Einfüllöffnung ein Verschlußorgan zugeordnet ist. Hierfür sind voneinander abweichende Ausführungsformen möglich. So kann beispielsweise das Verschlußorgan als Schwenkklappe mit einer Schließhydraulik bzw. mit einem Schloß ausgebildet sein.

Das Verschlußorgan kann aber auch sehr zweckmäßig als Doppelschieber mit Liniarantrieb ausgebildet sein, der beispielsweise mit zwei einander gegenüberliegend angeordneten Kolben/Zylinder-Stelleinheiten ausgebildet ist.

Eine Ausgestaltung sieht vor, daß dem Verschlußorgan ein Füllstutzen und diesem eine vorzugsweise gravimetrisch oder volumetrisch arbeitende Chargiereinrichtung zugeordnet ist. Dabei kann weiter dem Doppelschiebar beispielsweise eine Niveaumessung am Füllstutzen zugeordnet sein.

Hierdurch wird mit unkomplizierten und betrieblich zuverlässigen Mitteln sichergestellt, daß die Kammer bei jedem Füllvorgang einer Charge gleichmäßig und vollständig gefüllt ist. Dies ist sehr wichtig, um bei Einleitung des Preßvorganges auf das Schüttgut einwirkende Scherkräfte und damit nachteilige Schmiereffekte gegenüber der Chargenschichtung sicher zu vermeiden.

Eine Ausgestaltung sieht weiter vor, daß die Innenwand des Mantelringes gegen den Bereich seiner freien Stirnwand zu mit einer schlankkonischen Erweiterung ausgebildet ist.

Der Bereich der Erweiterung ist in seiner axialen Erstreckung so bemessen, daß er in etwa mit der Dicke des fertig verdichteten Preßkuchens übereinstimmt. Beim Zurückziehen des Mantelringes zum Öffnen der Preßkammer und zum Auswerfen des Preßkuchens bewirkt die sich in Richtung der Öffnungsbewegung erweiternde Konizität des Ring-Innenmantels eine Entlastung vom Druck des Preßkuchens und somit eine problemlose und schnelle Öffnung.

Eine Ausgestaltung sieht vor, daß wenigstens eine der Preßwände einer Preßkammer als Filterelement mit Ablaufkanälen und/oder Durchtrittsöffnungen für Filtrat ausgebildet und mit einem für das von der festen Masse des Preßkuchens zu trennende gasförmige und/oder flüssige Medium durchlässigen Schicht aus Filtermaterial belegt ist.

Dabei sieht eine Ausgestaltung mit Vorteil weiter vor, daß eine als Filterelement ausgebildete erste Preßwand einer ersten Preßkammer und eine vorzugsweise ebenfalls als Filterelement ausgebildete zweite Preßwand einer zweiten Preßkammer im parallelen Abstand mit einem Zylindermantel zu einem die beiden Preßkammern in Richtung des Wirkdruckes kraftschlüssig miteinander verbindenden zylinderförmigen Hohlkörper ausgebildet sind.

Mit großem Vorteil wird hierdurch eine unkomplizierte und kompakte Bauweise der Vorrichtung erreicht, wobei ein von einer Kopfseite der Vorrichtung gegen die entgegengesetzte Kopfseite gerichteter Preßdruck, beispielsweise einer Preßhydraulik, von jeweils einer Preßkammer über jeweils einen Hohlkörper auf jeweils eine benachbarte Preßkammer übertragen wird, usw.

Eine Ausgestaltung sieht weiter vor, daß die äußere Mantelfläche eines jeden Hohlkörpers als zylinderförmige Führungsfläche für einen darauf geführten Mantelring ausgebildet ist und am Bereich des freien Endes eine gegen den Mantelring abdichtende Ringdichtung aufweist.

Dabei kann, gemäß einem weiteren Vorschlag, ein Hohlkörper mit wenigstens einer als Filterelement angeordneten Preßwand als Filtratkammer mit wenigstens einem Filtratablauf ausgebildet sein. Hierdurch ergibt sich der Vorteil, daß am Filterelement anfallendes bzw. durch dieses in die Filtratkammer hindurchtretendes Filtrat lediglich unter Einwirkung seiner Schwerkraft abfließen kann, ohne daß zu dessen Beseitigung weitere Mittel wie Saugpumpen eingesetzt zu werden brauchen.

Eine Ausgestaltung sieht vor, daß Mantelringe relativ zueinander in axialer Richtung beweglich durch Führungs- und Stellmittel einstellbar geführt sind, wobei einer Einheit mehrerer Preßkammern, die jeweils zwischen benachbarten Hohlkörpern ausgebildet sind, ein als Spannbock ausgebildeter gemeinsamer Rahmen als Vorrichtungsgestell mit einer Preßhydraulik an einer Kopfseite zugeordnet ist.

Bei einer anderen Ausgestaltung der Vorrichtung ist vorgesehen, daß die Hohlkörper zwischen jeweils zwei durch Zuganker verbundenen Kopfstücken eines Vorrichtungsgestelles in gleichen gegenseitigen Abständen mit Abstandshaltern fest verbunden angeordnet sind, wobei jeder Hohlkörper an einer Stirnseite eine als Filterelement angeordnete Preßwand aufweist und die andere Seite des Hohlkörpers als Ringkolben ausgebildet ist und einen auf dessen Mantelfläche axial-teleskopierend verschiebbaren Ringzylinder aufnimmt, wobei dessen stirnseitiger Abschluß von einer eine Preßkammer begrenzenden, als Filterelement ausgebildeten Preßwand gebildet wird und der Druckraum zwischen der Kolben/Zylinder-Einheit von Ringkolben und Ringzylinder über eine Druckleitung an einen hydraulischen Druckerzeuger angeschlossen ist.

Bei dieser Anordnung erfolgt mit Vorteil die Verschiebung der Preßwand durch Einleiten von Druckwasser in den Raum hinter die Preßwand bzw. zwischen Ringkolben und Ringzylinder. Die Druckerzeugung des Druckwassers kann beispielsweise durch eine mehrstufige Kreiselpumpe oder durch zwei mehrstufige Kreiselpumpen erfolgen, die beim Füllen in einer ersten Druckstufe parallel und beim HochdruckPressen hintereinander geschaltet sind, bzw. durch eine mehrstufige Kreiselpumpe für den Niederdruckbereich und eine zusätzliche Kolbenpumpe für den Hochdruckbereich.

Die Rückführung der verschiebbaren Preßwand in die Ausgangslage erfolgt durch Ablassen des Druckwassers in einen über eine Entleerungsleitung angeschlossenen Tiefbehälter, in welchen die Leitung als Tauchrohr eingeleitet ist. Gemäß dem Höhenunterschied zwischen Vorrichtung und Tiefbehälter ergibt sich ein wirksamer Unterdruck, unter dessen Einfluß die Preßwand bei abfliessendem Druckwasser zurückgezogen wird.

Diese Bauweise hat den Vorteil sehr einfacher Ausführung, weiterhin kurzer Baulänge sowie weniger bewegter Teile.

Um hierbei einer Kipp- oder Kantgefahr des Ringzylinders auf dem Ringkolben zu begegnen, wird mit einer weiteren Ausgestaltung vorgeschlagen, daß der Kolben/Zylinder-Einheit von Ringkolben und Ringzylinder ein zentrales Führungselement, vorzugsweise in Form eines in einem Führungszylinder geführten Führungskolbens, zugeordnet ist.

Bei dieser Bauweise sieht eine weitere Ausgestaltung vor, daß auf der Mantelfläche des Ringzylinders ein Mantelring in axialer Rich tung verschiebbar geführt ist, und daß die Mantelringe in gleichen Abstände an einem sie starr verbindenden Steuergestänge befestigt sind und dieses in axialen Führungen geführt und mit Stelleinrichtungen antreibbar ausgebildet ist.

Eine weitere vorteilhafte Ausgestaltung der Vorrichtung sieht vor, daß diese an ihren Preßkammern einen in drei Positionen - Öffnen -Füllen - Schließen - verschiebbaren, vergleichsweise doppelt-breiten Mantelring aufweist, der an seiner Oberseite an einem ersten Ringbereich eine Einfüllöffnung ohne Verschlußorgan und daran anschließend einen zweiten geschlossenen Ringbereich als Verschlußorgan für die Preßkammer aufweist.

Gegenüber der vorbeschriebenen Ausführung des vergleichsweise schmäleren Mantelringes mit verschließbarer Füllöffnung ist hier ein in einer zusätzlichen Stufe - Füllen - verschiebbarer Mantelring vorgesehen. In der ersten Stufe - Öffnen - ist der Mantelring soweit verschoben, daß die Preßkammer und der Preßspalt ringsum geöffnet ist und der Preßkuchen herausfallen kann. In der zweiten Stufe - Füllen -ist der Mantelring soweit verschoben, daß bei ansonst geschlossener Preßkammer eine Einfüllöffnung sich oberhalb der Kammer befindet und damit die Kammer durch einfachen Zulauf des rieselfähigen Gutes gefüllt werden kann. An schließend wird der Mantelring in die dritte Stufe - Schließen - verschoben und der Preßvorgang eingeleitet.

Bei dieser Ausführung erübrigt sich mit Vorteil die Anordnung von Klappen oder Schiebern zum Verschließen der Füllöffnung, weil der Füllvorgang einfach durch Verschieben des Mantelringes beendet wird. Daher wird auch keine Niveausteuerung für das Füllgut und fallwise auch keine Chargiereinrichtung benötigt. Es ergibt sich somit eine außerordentlich einfache und funktionelle wirkungsvolle Ausgestaltung der Gesamtvorrichtung.

Hierfür wird in Kauf genommen, daß der Mantelring um die Breite der einen Stufe und damit annähernd doppelt so breit sein wird, als bei den Ausführungen mit Verschlußeinrichtung im Bereich der Einfüllöffnung. Andererseits hat der verbreiterte Mantelring den Vorteil, daß auch die Hohlkörper breiter und damit die Führungen einerseits für den Mantelring und andererseits für den Führungszylinder des Ringkolbens breiter werden, so daß die Gefahr eines Verkantens des Ringkolbens wirksam vermieden ist.

Diese Ausführung zeichnet sich durch Einfachheit und weniger bewegter Teile aus, besitzt jedoch eine insgesamt größere Baulänge.

Und schließlich sieht eine Ausgestaltung vor, daß die vorrichtung anstelle einer festen Preßwand eine je Preßkammer einseitig frei dehnbar bewegliche, mit Druckmedium wie Druckwasser hinterflutbar angeordnet Hydraulik-Druckmembran aufweist, welche den Preßvorgang in der Preßkammer bewirkt, indem sie vom Druckwasser hinterflutet wird.

Weil diese Preßmembrane zunächst mit glatter Oberfläche, das heißt ohne Filtrationsdrainage vorgesehen ist, kann nur die halbe Kammerbreite der Preßkammer als Füll- und Preßraum vorgesehen werden. Die Preßmembrane ist vorzugsweise als Topfmembrane ausgebildet und angeordnet, um den erforderlichen Preßweg ohne zu große Beanspruchung des Membranmaterials zuzulassen. Vorzugsweise ist die Formgebung und Ausbildung der Einspannstelle so ausgeführt, daß auf die Membran keine Stauchung und möglichst nur eine geringe Dehnung ausgeübt wird.

Diese Ausgestaltung hat den Vorteil, daß die Abdichtung des Mantelringes an der Membranseite durch deren periphere Ausdehnung von selbst erfolgt. Denn bei der Druckbeaufschlagung weitet sich die Membran nach außen und dichtet dadurch mit druckproportionaler Dichtkraft gegen den Mantelring ab.

Vorteilhaft zeichnet sich diese Ausgestaltung durch eine äußerst einfache und funktionell günstige Ausführung aus. Hierzu gibt es bis auf die verschiebbar ausgebildeten Mantelringe keine beweglichen mechanischen Teile.

Bei dieser Ausgestaltung der Vorrichtung kann ein Mantelring entweder mit einem Verschlußorgan der Einflüllöffnung als vergleichsweise schmaler Ring oder in einer breiteren Ausführung und mit dreistufiger Verschiebung mit einer Einfüllöffnung ohne Verschlußorgan ausgebildet sein.

Die Erfindung wird in schematischen Zeichnungen in einer bevorzugten Ausführungsformf gezeigt, wobei aus den Zeichnungen weitere vorteilhafte Einzelheiten der Erfindung entnehmbar sind.

Die Zeichnung zeigen im einzelnen:

Fig 1 eine Folge von in horizontaler Reihe angeordneten Preßkammern mit Mantelringen, in rein schematischer Darstellung und im Schnitt einer vertikalen, in axialer Richtung der Vorrichtung verlaufenden Ebene,

Fig. 2a einen Mantelring in Frontansicht sowie teilweise geschnitten,

Fig. 2b den Mantelring im Querschnitt einer vertikalen, in axialer Richtung verlaufenden Ebene,

Fig. 2c den Mantelring in Ansicht von oben,

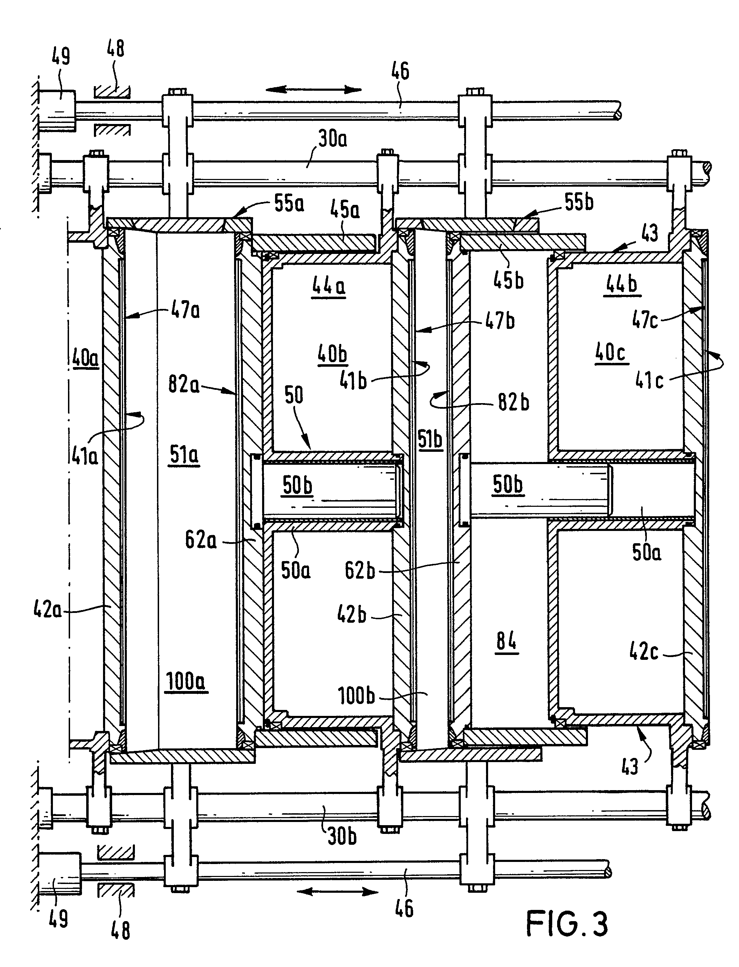

Fig. 3 eine andere Ausführung von Preßkammern mit Einzel-Hydraulikantrieb der Preßkammern, in rein schematischer Darstellung, im Schnitt einer vertikalen, in axialer Richtung der Vorrichtung verlaufenden Ebene,

Fig. 4 eine andere Ausführung der Preßkammern mit Einzel-Hydraulikantrieb und verbreitertem Mantelring, ebenfalls im Schnitt einer vertikalen Ebene,

Fig. 5 eine andere Ausführung der Preßkammern mit Einzel-Hydraulikantrieb und Preßmembran, ebenfalls im Schnitt einer vertikalen Ebene,

Fig 6 eine Zusammenstellung der vollständigen Vorrichtung, von der Seite gesehen,

Fig. 7 die Vorrichtung gemäß Fig. 6 in Ansicht in Richtung ihrer Längsachse.

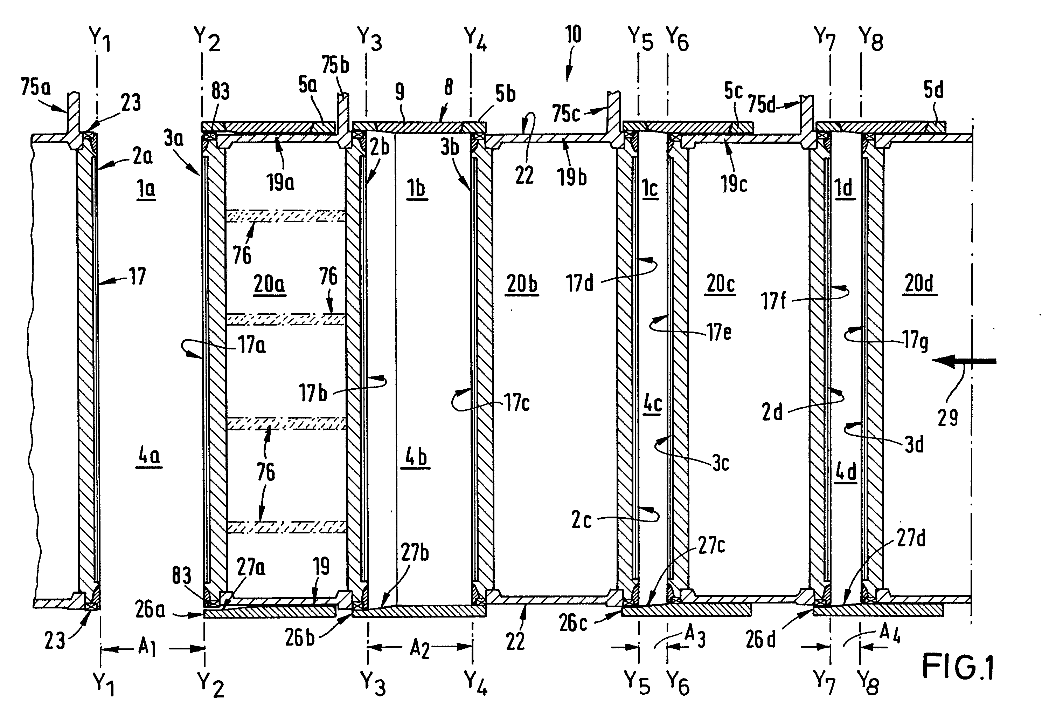

Die in der Fig. 1 im Vertikalschnitt rein schematisch gezeigte Anordnung von vier Preßkammern (1a, 1b, 1c, 1d) weist - von links nach rechts gesehen - eine erste ringsum geöffnete Preßkammer (1a) auf. Jede der Preßkammern (1a bis 1d) weist ein Paar im Abstand parallele, in vertikalen Ebenen (y1 - y2, y2 - y2, y3 - y3, usw.) verlaufende sowie in horizontaler Richtung verschiebbare Preßwände (2a, 3a, 2b, 3b, 2c, 3c, 2d, 3d) auf.

Die Preßwände (2) bzw. (3) sind relativ zueinander mit veränderlichem Abstand (A) antreibbar und begrenzen zwischen sich jeweils einen vertikalen Preßspalt (4a, 4b, 4c, 4d). Sie stehen mit Mitteln (29) bzw. (44, 45) oder (56) zur Abstandsänderung unter Preßdruck in Verbindung.

Wie die schematische Darstellung der Fig. 1 weiter erkennen läßt, ist jeder Preßkammer (1) ein relativ zu und auf dieser axial-verschiebbarer Mantelring (5a, 5b, 5c, 5d) zugeordnet.

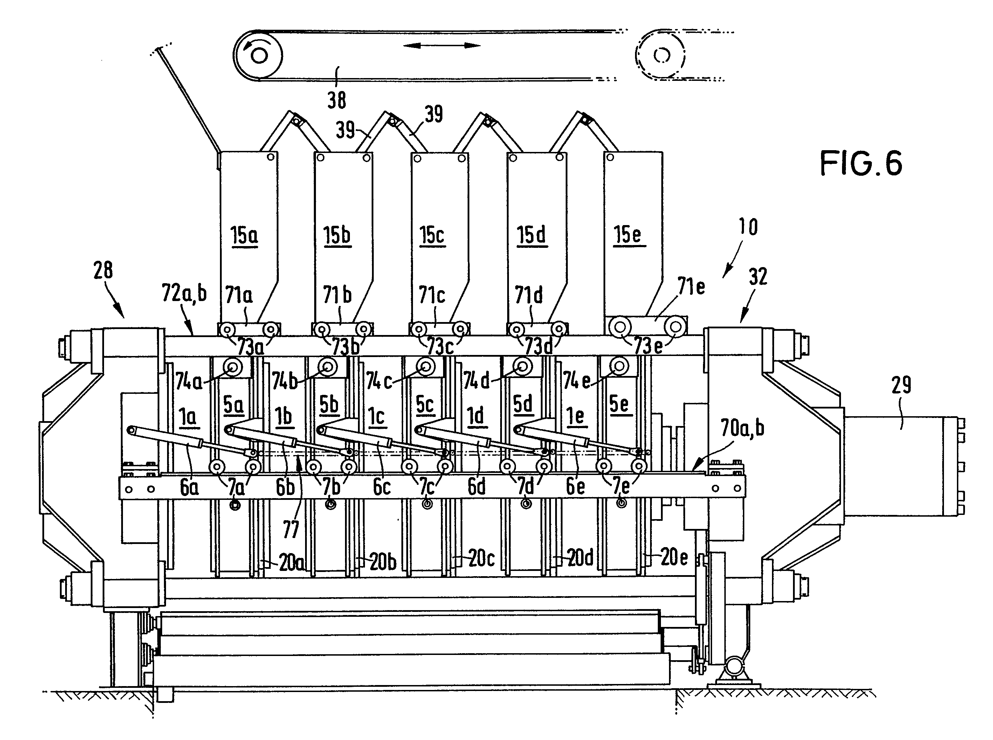

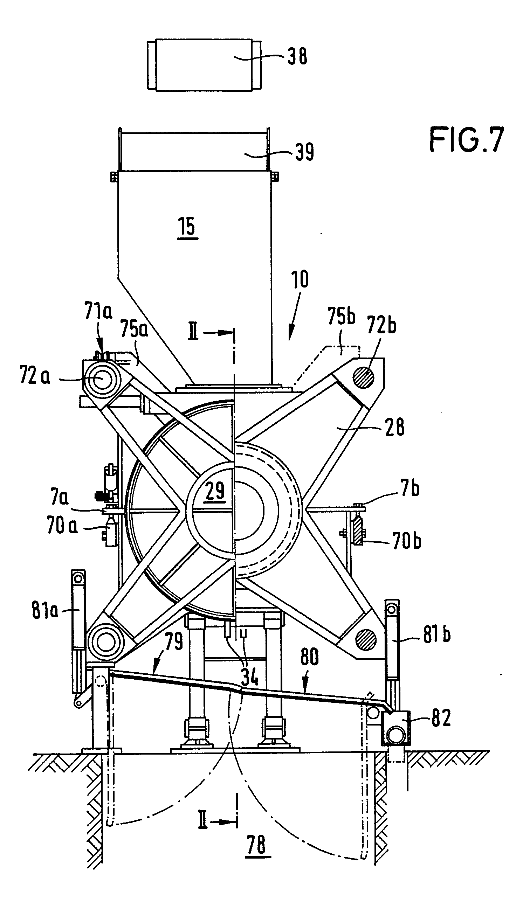

Dieser weist gemäß Darstellung in den Fig. 6 und 7 Antriebs- und Führungsmittel (6) bzw. (7) zur taktweisen Verschiebung von einer den Preßspalt (4b) überbrückenden und die Preßkammer (1b) nach außen umschließenden ersten Axialposition zu einer den Preßspalt (4a) freigebenden und die Preßkammer (1a) ringsum öffnenden zweiten Axialposition auf (Fig. 1).

Die Fig. 1 zeigt weiterhin von links nach rechts eine vollständig geöffnete Preßkammer (1a). Bei dieser ist der Mantelring (5a) bis zum Anschlag nach rechts verschoben und gibt die Preßwände (2a) und (3a) ringsum vollständig frei. Die nach rechts zu benachbarte Preßkammer (1b) ist hingegen durch den Mantelring (5b) ringsum vollständig geschlossen. Damit ist auch der Preßspalt (4b) nach außen druckdicht umschlossen. In der gezeigten Darstellung ist die Einfüllöffnung (8) mit einem schematisch angedeuteten Verschlußorgan (9) verschlossen. Die weiter rechts angeordneten und mit (1c) bzw. (1d) bezeichneten Preßkammern sind in einer Position gezeigt, die dem vollendeten Preßvorgang vor dem Öffnen der Kammern (1) und Austragen des Preßkuchens entspricht. Dabei ist die Spaltbreite (A 3) bzw. (A 4) gegenüber der Spaltbreite (A 1) der geöffneten Kammer (1a) bzw. (A 2) der noch nicht zusammengepreßten Kammer (1b) etwa auf 30 % der ursprünglichen Spaltbreite reduziert.

Wie aus der Zusammenschau der Fig. 1 und 6 hervorgeht, ist die Vorrichtung als Mehrkammerpresse (10) mit in horizontaler Reihe angeordneten Preßkammern (1a bis 1e) ausgebildet. Hierdurch wird bei entsprechender Abmessung der einzelnen Elemente der Vorrichtung und einer entsprechenden Taktfolge eine quasi-kontinuierliche Betriebsweise mit vergleichsweise großem Durchsatz erzielt.

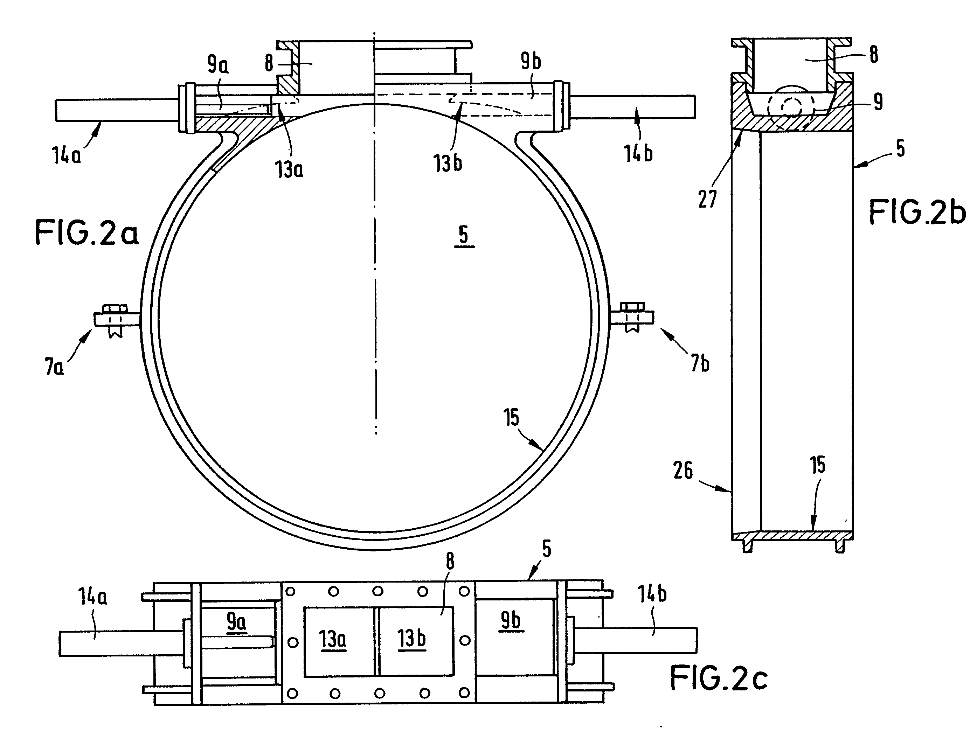

In den Fig. 2a bis 2c ist ein Mantelring in Frontansicht, Seitenansicht und teilweise im Schnitt sowie in Draufsicht dargestellt. Der Mantelring (5) weist an seiner Oberseite eine Einfüllöffnung (8) auf. Dieser ist bei der gezeigten vorzugsweisen Ausführung ein Verschlußorgan (9) zugeordnet. Alternativ kommen hierfür äquivalente Lösungen in Frage; beispielsweise kann das Verschlußorgan (9) eine Schwenkklappe mit Schließhydraulik oder eine Schwenkklappe mit Sperrhebel (nicht gezeigt) sein. In der gezeigten Ausführung ist das Verschlußorgan (9) als Doppelschieber (13a, 13b) ausgebildet und weist als Antrieb zwei einander gegenüberliegende Linearantriebe (14a) und (14b) auf. Es handelt sich hierbei vorzugsweise um hydraulische Kolben/ Zylinder-Einheiten.

Die Zusammenstellungszeichnung der Vorrichtung in Fig. 6 zeigt, daß jedem Verschlußorgan (9a bis 9e) ein Füllstutzen (15a bis 15e) zugeordnet ist. Dieser ist so bemessen, daß er das Volumen einer Charge der darunterliegenden Preßkammer (1a bis 1e) aufnehmen kann. Oberhalb von diesen sind Förder- und Aufgabemittel, wie beispielsweise ein Transport (38), vorgesehen. Die können auch fallweise mit einer Chargiereinrichtung (nicht gezeigt) ausgebildet sein.

Um zu vermeiden, daß Anteile vom Gut beim Abwurf vom Förderband (38) zwischen die Füllstutzen (15a bis 15e) fallen und so die Vorrichtung verschmutzen könnten, sind am Kopfende der Füllstutzen (15a bis 15e) je ziehamonikaartig gelenkig miteinander verbundene Abweiser (39) vorgesehen.

Für eine reibungslose Funktion beim Verschieben der Mantelringe (5) auf den zylinderförmigen Hohlkörpern (20a bis 20e) sind die Mantelringe (5a bis 5e) gewichtsentlastet und damit praktisch berührungslos gegenüber den Hohlkörpern (20) geführt. Zu diesem Zweck besitzt jeder Mantelring (5a bis 5e) gemäß Darstellung in den Figuren 2a sowie 6 seitliche Führungen (7a bis 7e). Sie können, wie dies die Fig. 2a zeigt, als Schlittenführungen mit prismatischen Führungsflächen ausgebildet sein, wie dies beispielsweise von Werkzeugmaschinen bekannt ist. Diese prismatischen Führungen (7a, 7b) sind mittels Einstellschrauben höhenverstellbar ausgebildet. Die Führungen (7a bis 7e) gleiten oder laufen mit Schlittenführungen oder mit Rollenführungen auf Führungsschienen (70a, 70b), welche gemäß Darstellung in den Fig. 6 und 7 im Maschinengestell (32) ebenfalls mit Mitteln zur Höhenverstellung ausgebildet und angeordnet sind.

Entsprechend sind auch die Hohlkörper (20a bis 20e) an Führungen (71a bis 71e) hängend geführt. Als Führungsschienen dienen hierbei die beiden oberen Zuganker (72a) und (72b). Darauf rollen verfahrbar die Führungen (71a bis 71e) mit je einem Paar Führungsrollen (73a bis 73e). Die Doppelkreise (74a) bis (74e) stellen die stirnseitigen Ansichten der Antriebsanordnungen (9) bzw. (14a, 14b) der Flachschieber an den Mantelring (gemäß Fig. 2b, Ziff. 9) dar. Dabei hängen die Hohlkörper (20a bis 20e) in jeweils rechts und links einem Führungsarm (75a) bzw. (75b), welcher an der Oberseite eines jeden Hohlkörpers (20a bis 20e) angeordnet und in der Fig. 1 bruchstückhaft angedeutet ist.

Dadurch, daß sowohl die Hohlkörper (20a bis 20e) als auch die auf ihnen geführten Mantelringe (5a bis 5e) je für sich in separaten Führungen (7a, 7b, 70a, 70b bzw. 71 bis 74) exakt einstellbar geführt sind, ohne daß eines dieser Bauteile auf das andere sein Gewicht oder Teile seines Gewichtes überträgt, wird eine praktisch berührungslose gegenseitige Führung erreicht und eine sichere Funktion bei langer Verfügbarkeit der Vorrichtung ermöglicht.

Eine erfindungswesentliche Ausgestaltung sieht in diesem Zusammenhang vor, daß die Innenwand (15) des Mantelringes (5) gegen den Bereich seiner freien Stirnwand (26) zu mit einer schlank-konischen Erweiterung (27) ausgebildet ist.

Hierzu ist aus der Darstellung in Fig. 1 erkennbar, daß der Bereich der konischen Erweiterung (27a bis 27d) eine solche axiale Erstreckung aufweist, die in etwa dem Abstand (A 3) bzw. (A 4) der beiden Preßwände (2c, 3c) bzw. (2d, 3d) der Preßspalte (4c) bzw. (4d) im Endzustand der Verdichtung entspricht. Somit entspricht die axiale Erstreckung der konischen Erweiterung (27) in etwa der zu erwartenden Dicke des völlig ausgepreßten Preßkuchens. Wenn dann der Mantelring (5c, 5d) zur Öffnung der Preßspalte (4c, 4d) nach rechts zum Anschlag zurückgefahren wird, ist die Wandreibung zwischen der Innenwand (15) eines jeden Mantelringes (5) und der äußeren Schicht des Preßkuchens erheblich verringert und somit das Zurückziehen des Mantelringes (5) und Öffnen des Preßspaltes (4) erheblich erleichtert und weiterhin ein Anbacken von Teilen des Preßkuchens an der Innenwand (15) des Mantelringes (5) mit Vorteil verhindert.

Eine zweckmäßige Ausgestaltung sieht vor, daß wenigstens eine der Preßwände (2, 3) einer Preßkammer (1) als Filterelement (17) mit Ablauf-Kanälen und/oder Durchtrittsöffnungen für Filtrat ausgebildet und mit einem für das von der festen Masse zu trennende gasförmige und/oder flüssigem Medium durchlässigen Schicht aus Filtermaterial belegt ist. Sehr zweckmäßig kann hierbei eine Struktur des Filterelementes durch einen mehrschichtigen Aufbau auf der Oberfläche einer Preßwand (2) bzw. (3) vorgesehen sein, wobei auf der zunächst glatten Fläche der Preßwand (2) bzw. (3) ein Drahtgitter aufgelegt ist, darüber dann ein Lochblech und über diesem schließlich ein Filtertuch gespannt ist (nicht gezeigt).

Bei diesem Aufbau wird eine äußerst kostenaufwendige Strukturierung der Preßwände (2) bzw. (3) vermieden, diese können folglich ebenflächig ausgebildet sein.

Wie Fig. 1 weiter erkennen läßt, ist eine als Filterelement (17a) ausgebildete erste Preßwand (3a) einer ersten Preßkammer (1a) und eine vorzugsweise ebenfalls als Filterelement (17b) ausgebildete zweite Preßwand (2b) einer zweiten Preßkammer (1b) im parallelen Abstand mit einem Zylindermantel (19a) zu einem die beiden Preßkammern (1a, 1b) in Richtung des Wirkdruckes kraftschlüssig miteinander verbindenden zylinderförmigen Hohlkörper (20a) ausgebildet. In gleicher Weise ist zwischen den Filterelementen (17c, 17d) mit dem Zylindermantel (19b) der Hohlkörper (20b) und zwischen den Filterelemen ten (17e, 17f) mit dem Zylindermantel (19c) der Hohlkörper (20c) ausgebildet, usw.

Über die Preßwände (2, 3) der Hohlkörper (20) wird bei der in Fig. 1 und 6 beispielhaft dargestellten Ausgestaltung der Vorrichtung einer Mehrkammerpresse (10) der Preßdruck der Preßhydraulik (29) von einer Preßkammer (1d) über jeweils eine benachbarte Preßkammer (1c) und (1b) bis zur Preßkammer (1a) übertragen. Dabei müssen die Preßwände (2, 3) hohen Flächendrücken widerstehen, welche gegen Ende des Preßvorganges in einer Größenordnung zwischen 50 und 70 daN/cm² auftreten. Zu diesem Zwecke sind die Hohlkörper (20) mit einer inneren Versteifungskonstruktion (76) ausgesteift. Es kann sich hierbei um eine sternförmige Schweißkonstruktion behandeln, wie eine solche lediglich beispielhaft im Hohlkörper (20a) der Fig. 1 mit gestrichelten Linien eingezeichnet ist.

Dabei ist, wie bereits erwähnt, die äußere Mantelfläche (22) eines jeden Hohlkörpers (20) als Führungsfläche für jeweils einen Mantelring (5a bis 5e) ausgebildet. Am Bereich des freien Endes weist der Hohlkörper (20) eine gegen den Mantelring (5) zu abdichtende Ringdichtung (23) auf.

In diesem Zusammenhang sei nochmals darauf hingewiesen, daß sowohl jeder Mantelring (5) für sich als auch jeder Hohlkörper (20) jeweils für sich auf einer ihn tragenden Führung exakt einstellbar geführt ist, so daß eine Gewichtsübertragung von einem dieser Teile auf das andere nicht stattfindet. Hierdurch werden u. a. dazwischen angeordnete Dichtungen entlastet und somit geschont.

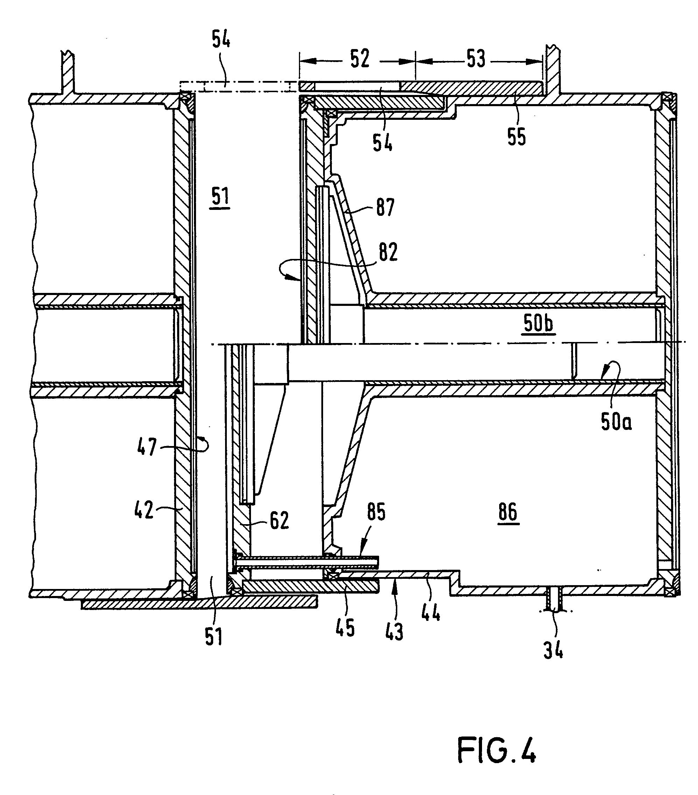

In der Fig. 4 ist eine Ausführung der Mehrkammerpresse (10) gezeigt, bei welcher gegenüber der vorbesprochenen Ausführung ein in mehreren Stufen verschiebbarer Mantelring (55) vorgesehen ist.

Die Vorrichtung (10) weist an der dargestellten Preßkammer (51) einen in drei Positionen "Öffnen" - "Füllen" - "Schließen" - verschiebbaren, vergleichsweise doppeltbreiten Mantelring (55) auf. Dieser besitzt an seiner Oberseite an einem ersten Ringbereich (52) eine Einfüllöffnung (54) und daran anschließend einen zweiten geschlossenen Ringbereich (53). Dieser dient, wie bereits vorgängig, beispielsweise anhand der Fig. 1 erläutert, als Verschlußorgan für die Preßkammer (51), und zwar in der in der Fig. 4 gezeigten unteren Position der geschlossenen und am Ende des Preßvorganges auf 1/3 ihrer ursprünglichen Breite verdichteten Preßkammer (51a). Die Preßwände (42) und (62) sind hier ebenfalls als Filterelement (47) bzw. (82) ausgebildet. Als Filtratablauf ist ein Teleskoprohr (85) angeordnet und mündet in den Filtratraum (86) mit den Filtratablauf (34).

Aus der Darstellung ersichtlich, wird der Mantelring (55) zunächst in eine Position verschoben, wobei seine Einfüllöffnung (54), entsprechend der gestrichelten Darstellung im oberen Teil der Fig. 4, sich über der Preßkammer (51) befindet und diese Preßkammer durch einfachen Zulauf des Gutes gefüllt werden kann. Anschließend wird der Mantelring (55) in die weitere Stufe, in die Preßstufe, verschoben und der Preßvorgang eingeleitet. Diese Stufe ist im unteren Teil der Fig. 4 dargestellt.

Bei dieser Ausführung erübrigt sich die Anordnung von Klappen oder Schiebern für den Füllvorgang im Zusammenhang mit der Einfüllöffnung (54), weil der Füllvorgang einfach durch Verschieben des Mantelringes (55) sowohl ausgelöst als auch in anderer Stellung des Mantelringes (55) von selbst beendet wird.

Bei dieser Alternativausführung muß der Mantelring (55) wesentlich breiter sein, als bei den vorherigen Ausführungen. Mit dem verbreiterten Mantelring werden auch die Wandungen, auf welchen er geführt ist, und demzufolge die Kolben'Zylinder-Einheit (45, 44) breiter. Damit wird die Vorrichtung insgesamt länger. Die breiteren Zylinder- bzw. Kolbenflächen (44, 45) ermöglichen jedoch eine längere Führung des Führungskolbens (50b) im Führungszylinder (50a) sowie, entsprechend dem gezeigten Ausführungsbeispiel der Fig. 4, eine verbreiterte, biege steife Abstützung, beispielsweise in pilzartiger Form, der Stirnwand (87) des Ringkolbens (44). Ein Verkanten des Ringkolbens (44) im Ringzylinder (45) ist bei dieser Ausführung mit Sicherheit vermieden.

Als Vorteile dieser Ausführung ist deren besondere Einfachheit hervorzuheben, weil bis auf das Verschieben der Mantelringe (55) und des Ringzylinders (45) keine beweglichen Teile vorhanden sind.

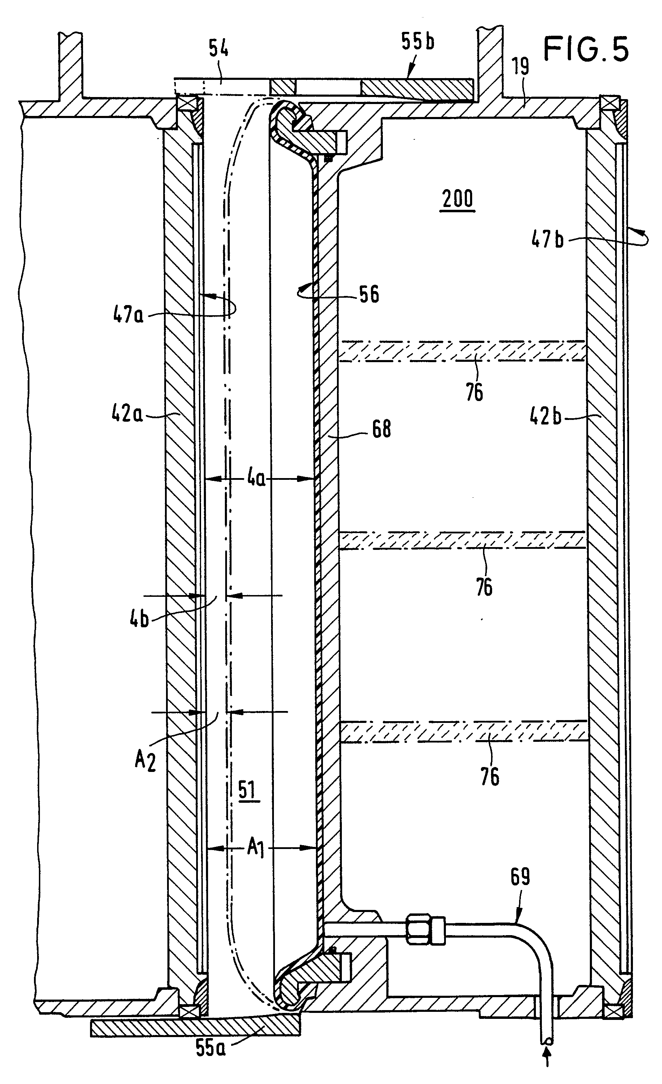

Und schließlich ist eine weitere Alternativausführung der Vorrichtung in der Fig. 5 dargestellt. Diese Ausführung sieht anstelle eines hydraulisch mit einer Preßwand (62) verschiebbaren Kompressions-Ringzylinders (45) eine einseitig bewegliche Preßmembran (56) vor. Die Preßkammer (51) weist als Begrenzung des Preßspaltes (4) einerseits eine als Filterelement (47) ausgebildete formstabile Preßwand (42) und gegenüberliegend eine mit einer vorspringbaren Druckmembran (56) überdeckte Wand (68) auf. Zwischen dieser und der Membran (56) ist über einen Druckwasseranschluß (69) Druckwasser einleitbar. Dabei wird die Membran (56) in die gestrichelt gezeichnete Position vorgepreßt und damit die im Preßspalt (4a) eingeschlossene Charge des Gutes verdichtet.

Hierbei wird die Preßkammer (4a) von ihrer ursprünglichen Preßspaltbreite (A 1) zur komprimierten Preßspalte (4b) mit der Spaltbreite (A 2) zusammengequetscht und dabei das Gut zu einem festen Preßkuchen verdichtet. Auch diese Bauart weist einen zwischen den Wänden (68) und (42b) ausgebildeten und mit einem Ringmantel (19) zylinderförmig umschlossenen Hohlkörper (200) auf. Zwischen den beiden Wänden (68) und (42b) sind, rein schematisch in gestrichelter Darstellung gezeigt, Stützelemente (76) vorgesehen.

Ein dieser Vorrichtungsausführung zugeordneter Mantelring (55) kann entweder, wie im unteren Bereich der Fig. 5 gezeigt, als schmaler Ring (55a) mit einer Einfüllöffnung (8) mit Verschlußorgan (9) ausgebildet sein, oder, wie in der Fig. 5 am oberen Bereich des Hohlkörpers (200) dargestellt, mit einem verbreiterten Mantelring (55b) mit einer nicht verschließbaren Einfüllöffnung (54).

Weil bei der gezeigten Ausführungsform mit Druckmembran (56, 50) diese mit Rücksicht auf eine preisgünstig und unkomplizierte Fertigung zunächst ohne Filtrationsdrainage vorgesehen ist, kann nur die vergleichsweise halbe Tiefe (A 1) der Preßkammer (51) für das Füllvolumen einer Charge vorgesehen sein. Die Druckmembran (56) ist vorzugsweise als Topfmembran ausgebildet, um während des Preßweges keine schädliche Walkung eintreten zu lassen. Auf diese Weise werden Stauchungen und Dehnungen im Material der Membran vermieden. Hingegen sind Biegungen und beidseitige Drücke unschädlich und somit zulässig.

Mit Vorteil erfolgt bei dieser Ausführung die Abdichtung des Mantelringes (55) an der Peripherie der Membran (56) durch diese selbst. Sie weitet sich nämlich bei Druckbeaufschlagung nach außen und dichtet dadurch gegen den Mantelring (55) ohne Einsatz eines weiteren Dichtungselementes ab.

Vorteile dieser Ausführung sind durch ihre signifikante Einfachheit gegeben. Bis auf den verschiebbaren Mantelring (55) weist diese Ausführung keine beweglichen Teile auf. Andererseits kann nur die halbe Breite (A 1) des Preßspaltes (4) in der Preßkammer (51) und somit ein halbiertes Chargenvolumen je Preßkammer (51) in Anspruch genommen werden.

Um mit den vorgängig beschriebenen Ausführungen bei gleichen äußeren Abmessungen im Durchmesser der Preßkammern vergleichsweise Durchsätze zu erzielen, müßte demnach die Anzahl der Preßkammern verdoppelt werden.

**Ansprüche**

1. Vorrichtung zum Austreiben gasförmiger und/oder flüssiger Medien aus schütt- bzw. rieselfähigem Gut unter Einwirkung von Preßdruck auf jeweils eine in mindestens einer Preßkammer eingeschlossene Charge des Gutes und Verdichten zur festen Masse eines Preßkuchens, wobei die Preßkammer ein Paar im Abstand parallele, im wesentlichen in vertikalen Ebenen verlaufende Preßflächen aufweist, dadurch gekennzeichnet, daß die Preßflächen (2, 3 bzw. 42, 62) in horizontaler Richtung verschiebbar sind und zwischen sich mit relativ zueinander veränderlichem Abstand (A) einen Preßspalt (4) mit vertikalen Wänden begrenzen und mit Mitteln (29 bzw. 44, 45 oder 56) zur Abstandsänderung unter Preßdruck in Verbindung stehen.

2. Vorrichtung nach Anspruch 1, dadurch gekennzeichnet, daß der Preßkammer (1, 51) ein relativ zu und auf dieser axial verschiebbarer Mantelring (5, 55) zugeordnet ist, der Antriebs- und Führungsmittel (6 bzw. 7) zur taktweisen Verschiebung von einer den Preßspalt (4) überbrückenden und die Preßkammer (1) nach außen umschließenden ersten Axialposition zu einer den Preßspalt (4) freigebenden und die Preßkammer (1) ringsum öffnenden zweiten Axialposition aufweist.

3. Vorrichtung nach den Ansprüchen 1 und 2, dadurch gekennzeichnet, daß diese als Mehrkammerpresse (10) mit in horizontaler Reihe angeordneten Preßkammern (1a, 1b, usw.) ausgebildet ist.

4. Vorrichtung nach den Ansprüchen 1 bis 3 dadurch gekennzeichnet, daß der Mantelring (5, 55) an seiner Oberseite eine Einfüllöffnung (8) aufweist.

5. Vorrichtung nach den Ansprüchen 1 bis 4, dadurch gekennzeichnet, daß der Einfüllöffnung (8) ein Verschlußorgan (9) zugeordnet ist.

6. Vorrichtung nach einem der Ansprüche 1 bis 5, dadurch gekennzeichnet, daß das Verschlußorgan (9) als Schwenkklappe mit einer Schließhydraulik (nicht gezeigt) bzw. mit einem Schloß ausgebildet ist.

7. Vorrichtung nach einem der Ansprüche 1 bis 5, dadurch gekennzeichnet, daß das Verschlußorgan (9) als Doppelschiebar (13a, 13b) mit Linearantrieben (14a, 14b) ausgebildet ist.

8. Vorrichtung nach einem der Ansprüche 1 bis 7, dadurch gekennzeichnet, daß jedem Verschlußorgan (9) ein Füllstutzen (15) und diesen eine vorzugsweise das Gut gravimetrisch oder volumetrisch zuteilende Chargiereinrichtung (38) zugeordnet ist.

9. Vorrichtung nach einem der Ansprüche 1 bis 8, dadurch gekennzeichnet, daß die Innenwand (15) des Mantelringes (5) gegen den Bereich seiner freien Stirnwand (26) zu mit einer schlank-konischen Erweiterung (27) ausgebildet ist.

10. Vorrichtung nach einem der Ansprüche 1 bis 9, dadurch gekennzeichnet, daß wenigstens eine der Preßwände (2, 3) einer Preßkammer (1) als Filterelement (17) mit Ablauf-Kanälen und/oder Durchtrittsöffnungen für Filtrat ausgebildet und mit einem für das von der festen Masse zu trennende gasförmige und/oder flüssige Medium durchlässigen Schicht aus Filtermaterial belegt ist.

11. Vorrichtung nach einem der Ansprüche 1 bis 10, dadurch gekennzeichnet, daß eine als Filterelement (17) ausgebildete erste Preßwand (3) einer ersten Preßkammer (1a) und eine vorzugsweise ebenfalls als Filterelement (17) ausgebildete zweite Preßwand (2) einer zweiten Preßkammer (1b) im parallelen Abstand mit einem Zylindermantel (19) zu einem die beiden Preßkammern (1a, 1b) in Richtung des Wirkdruckes kraftschlüssig miteinander verbindenden zylinderförmigen Hohlkörper (20) ausgebildet sind.

12. Vorrichtung nach einem der Ansprüche 1 bis 11, dadurch gekennzeichnet, daß die äußere Mantelfläche (22) eines jeden Hohlkörpers (20) als Führungsfläche (33) für einen darauf geführten Mantelring (5a, 5b, 5c bzw. 55 usw.) ausgebildet ist und am Bereich des freien Endes eine gegen den Mantelring (5 bzw. 55) zu abdichtende Ringdichtung (23) bzw. (83) aufweist.

13. Vorrichtung nach einem der Ansprüche 1 bis 12, dadurch gekennzeichnet, daß ein Hohlkörper (20) mit wenigstens einer als Filterelement (17) angeordneten Preßwand (2) bzw. (3) als Filtratkammer mit wenigstens einem Filtratablauf (34) ausgebildet ist.

14. Vorrichtung nach einem der Ansprüche 1 bis 13, dadurch gekennzeichnet, daß Mantelringe (5a, 5b, 5c usw.) und Preßwände (2a bis 2e) bzw. (3a bis 3e) relativ zueinander in axialer Richtung durch Führungsmittel sowie Stellmittel (6, 77) einstellbar geführt sind, wobei einer Einheit mehrerer Preßkammern (1a, 1b, 1c usw.), die jeweils zwischen benachbarten Hohlkörpern (20) ausge bildet sind, ein als Spannbock ausgebildeter gemeinsamer Rahmen (28) als Vorrichtungsgestell mit einer Preßhydraulik (29) an einer Kopfseite zugeordnet ist.

15. Vorrichtung nach einem der Ansprüche 1 bis 14, dadurch gekennzeichnet, daß die Hohlkörper (40) zwischen jeweils zwei durch Zuganker (30) verbundenen Kopfstücken (31a, 31b) eines Vorrichtungsgestelles (32) in gleichen gegenseitigen Abständen mit Abstandhaltern (37) fest verbunden angeordnet sind, wobei jeder Hohlkörper (40a, 40b, 40c usw.) an einer Stirnseite (41a usw.) eine als Filterelement (47a usw.) angeordnete Preßwand (42a usw.) aufweist und die andere Seite des Hohlkörpers (40a usw.) als Ringkolben (44) ausgebildet ist und einen auf dessen Mantelfläche (43) axial teleskopierend verschiebbaren Ringzylinder (45) aufnimmt, wobei dessen stirnseitiger Abschluß von einer eine Preßkammer (51) begrenzenden, als Filterelement (82) ausgebildeten Preßwand (62a usw.) gebildet wird und der Druckraum (84) zwischen Ringkolben (44) und Ringzylinder (45) über eine Druckleitung an einen hydraulischen Druckerzeuger (nicht gezeigt) angeschlossen ist.

16. Vorrichtung nach einem der Ansprüche 1 bis 15, dadurch gekennzeichnet, daß auf der Mantelfläche des Ringzylinders (45) ein Mantelring (55) in axialer Richtung bewegbar geführt ist, und daß die Mantelringe (55) in gleichen Abständen an einem sie starr verbindenden Steuergestänge (46) befestigt sind und dieses in axialen Führungen (48) geführt und mit Stelleinrichtungen (49) antreibbar ausgebildet ist.

17. Vorrichtung nach einem der Ansprüche 1 bis 16, dadurch gekennzeichnet, daß der Kolben-Zylinder-Einheit (44/45) ein zentrales Führungselement (50), vorzugsweise in Form eines in einem Führungszylinder (50a) geführten Führungskolbens (50b) zugeordnet ist.

18. Vorrichtung nach einem der Ansprüche 1 bis 17, dadurch gekennzeichnet, daß diese relativ zu ihren Preßkammern (51a usw.) einen in drei Positionen - Öffnen - Füllen -Schließen - verschiebbaren, vergleichsweise doppelt-breiten Mantelring (55) aufweist, der an seiner Oberseite an einem ersten Ringbereich (52) eine Einfüllöffnung (54) ohne Verschlußorgan und daran anschließend einen zweiten geschlossenen Ringbereich (53) als Verschlußorgan für die Preßkammer (51a usw.) aufweist.

19. Vorrichtung nach einem der Ansprüche 1 bis 18, dadurch gekennzeichnet, daß diese als Begrenzung des Preßspaltes (4) der Preßkammer (51) einerseits eine als Filterelement (47) ausgebildete Preßwand (42) und gegenüberliegend eine mit einer vorspringbaren Druckmembran (56) überdeckte Wand (68) aufweist, wobei zwischen diese und die Membran (56) über einen Druckwasserausschluß (69) Druckwasser einleitbar ist.

FIG.1

EP 0 318 872 A2

H87/36

FIG.2b

FIG.2c

FIG.2a

H87/36

FIG.3

FIG.4

EP 0 318 872 A2

FIG.5

FIG.6

FIG.7